# EUROPEAN PATENT SPECIFICATION

(11) **EP 1 628 871 B1**
(45) Date of publication and mention of the grant of the patent: **15.10.2008**
(21) Application number: 04733073.3
(22) Date of filing: 14.05.2004
(51) Int. Cl.: B62D 31/02, B62D 65/00, B60N 2/01, B60N 3/00

(54) **PROCESS FOR MANUFACTURING A MULTI-DOOR CAR WITH INDEPENDENT ACCESSES**
VERFAHREN ZUR HERSTELLUNG EINES MEHRTÜRWAGENS MIT JEWEILS UNABHÄNGIGEN ZUGÄNGEN
PROCEDE DE FABRICATION D'UNE VOITURE A PORTIERES MULTIPLES A ACCES INDEPENDANT

(30) Priority: 27.05.2003 IT TO20030389
(43) Date of publication of application: 01.03.2006
(73) Proprietor: Idea Project, S.A.G.L., 6963 Pregassona (CH)
(72) Inventor: PAINI, Alberto, CH-6996 Ponte Cremenaga, Lugano (CH)
(74) Representative: Garavelli, Paolo
(86) International application number: PCT/IT2004/000271
(87) International publication number: WO 2004/106147

(56) References cited:
- EP-A- 1 097 861
- GB-A- 2 328 651
- US-A- 1 452 369
- US-A- 4 014 585
- US-A- 4 231 144
- US-A1- 2002 163 215
- PATENT ABSTRACTS OF JAPAN vol. 2002, no. 02, 2 April 2002 (2002-04-02) -& JP 2001 270366 A (JOHNSON CONTROLS AUTOMOTIVE SYSTEMS CORP), 2 October 2001 (2001-10-02)

## Description

The present invention refers to a process for manufacturing a multi-door car, in particular a car that allows the independent access to the car itself by each one of its passengers.

US-A-4014985 discloses an automobile body construction with six doors and six seats.

The current automotive field provides for cars and vehicles for transporting people or transporting people and goods with a very wide range of housing arrangements and configurations of seats and comfort gadgets. In particular, above all in the "monovolume" type of cars, for which the current standard provides for the possible transport of six-seven people at the same time, it must be noted that the current trend is equipping the cars with seats that are able to be bent and/or removed in order to make the internal car volume the most versatile possible and able to satisfy almost any type of housing and loading need. If in fact the car is aimed for transporting people, it will be enough to assemble all necessary seats, while if a goods and/or merchandise loading volume is mandatory that is greater than usual, it will be enough to remove one or more seats, always and anyway keeping the possibility of a miscellaneous transport available.

The possibility of increasing the vehicle capacity by means of such seat modularity, however, has several disadvantages. One disadvantage is that, though such vehicles allow transporting a high number of people, none of them offers an independent access to each passenger: this means that some passengers, in order to access or exit the car, will have to overturn some seats or to move other passengers; this solution thereby generates annoying consequences and is scarcely practical and comfortable.

Another disadvantage is that the same promiscuity when travelling between people that possibly do not know each other, could result annoying and create embarassment among the occupants.

Moreover, the assembling of a great number of seats on the same car guarantees a high capacity, but highly impairs the movement autonomy of each passenger, and the space available for him.

From everything that has been previously stated, it follows that current cars, in the situation in which all seats are occupied, have disadvantages and compel the passengers to make sacrifices that can be accepted only transiently.

Moreover, all existing cars, though being equipped with a number of seats that is able to house up to a maximum of seven people, have a maximum of four access doors to the passenger compartment with the effect that not all passengers have an adequate movement autonomy and car entry/exit autonomy.

US-A-4 014 585 discloses a process for manufacturing a car with independent accesses, wherein the process modifies a mass-produced car and comprises the steps of: removing the whole roof panel, the internal compartment trim, the doors, the windscreen and the rear door from said mass-produced car to obtain a short chassis; assembling a cage hoop with arrangements for an additional door bay on each side; and re-assembling the seats, the components and possible optionals and comfort gadgets.

In the process according to US-A-4 014 585, the automobile body is cut into a front body section and a back body section which are separated by introducing a body extending section between the front and back body sections.

Object of the present invention is solving the above prior-art problems, by modifying a mass-produced car with a process according to claim 1.

Another object of the present invention is providing a process for manufacturing a car with independent and spaced seats to guarantee the maximum individual comfort with a minimum encumbrance and the highest autonomy for each passenger.

A further object of the present invention is providing a process for manufacturing a car that guarantees a high comfort to each one of its passengers keeping a ground encumbrance that is not greater than the one of a medium-high segment car.

The above and other objects and advantages of the invention, as will appear from the following description, are obtained by a process for manufacturing a car as claimed in Claim 1. Preferred embodiments and non-trivial variations of the present invention are claimed in the dependent Claims.

The present invention will be better described with reference to the enclosed drawings, in which:
- Figure 1 shows a side view of a multi-door car
- Figure 2 shows a side view of a multi-door car ;
- Figure 3 shows a top view of the passenger compartment interior of a multi-door car ;
- Figure 4 shows a top view of the passenger compartment interior of a multi-door car ;
- Figure 5 shows a side view of a step of an embodiment the process for manufacturing a multi-door car according to the present invention;
- Figure 6 shows a side view of another step of an embodiment the process for manufacturing a multi-door car according to the present invention; and
- Figure 7 shows a view of a multi-door car according to the present invention resulting at the end of its manufacturing process according to the present invention.

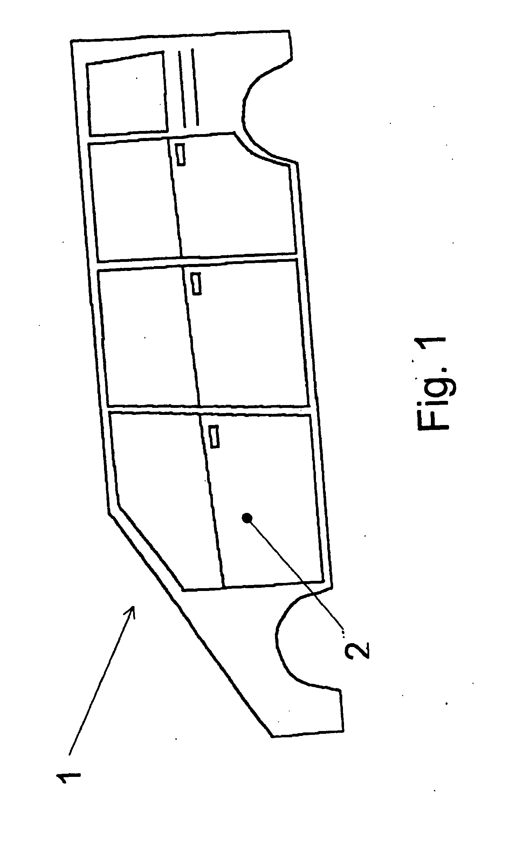

With reference to Fig. 1, a car 1 is shown: such car 1 has a total of six access doors (in the Figure a single door is designated with number 2) arranged three on each side (plus, obviously, a rear baggage door (not shown) in order to access the baggage compartment).

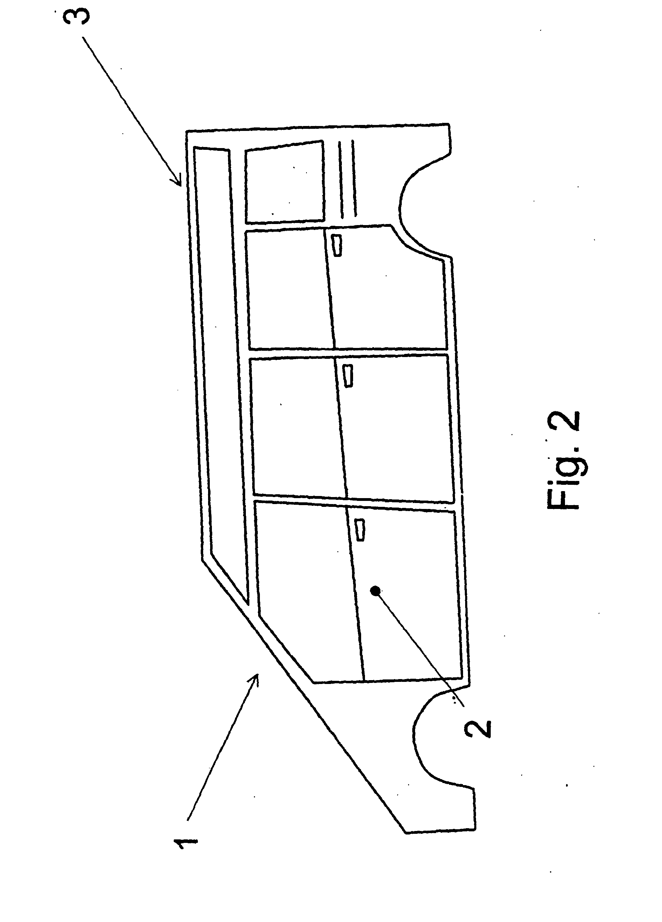

Fig. 2 shows a car 1 , in which it has been provided to rise the compartment roof panel 3, that, in combination with a sump which can be walked onto (not shown), provides the car 1 with a central corridor (not shown) that allows the passengers to move in a standing position inside the car 1.

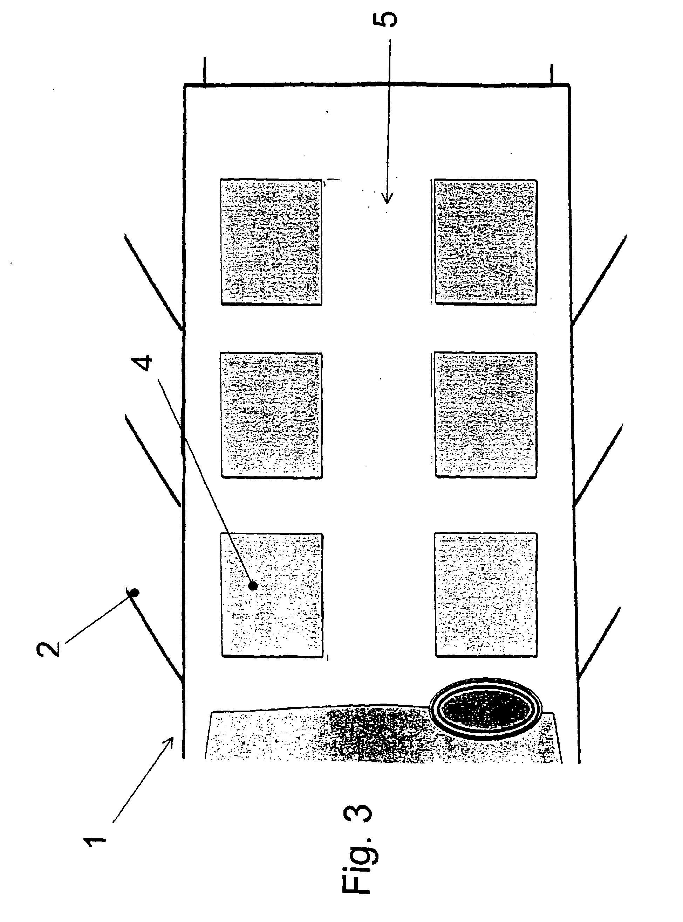

Fig. 3 shows a top view of the passenger compartment interior of a car 1 ; it is possible to note how the seats (in the Figures a single seat is pointed out with number 4) for passengers are all equipped with an access door 2 to guarantee the maximum autonomy to every occupant, and are adequately spaced to guarantee the maximum comfort. Moreover, the space 5 existing between the two parallel rows of seats 2 can be used to obtain the above sump that, in combination with the above rise of the roof panel 3 of the car 1 passenger compartment, forms a central corridor as previously described and partially shown in Fig. 2 and 3.

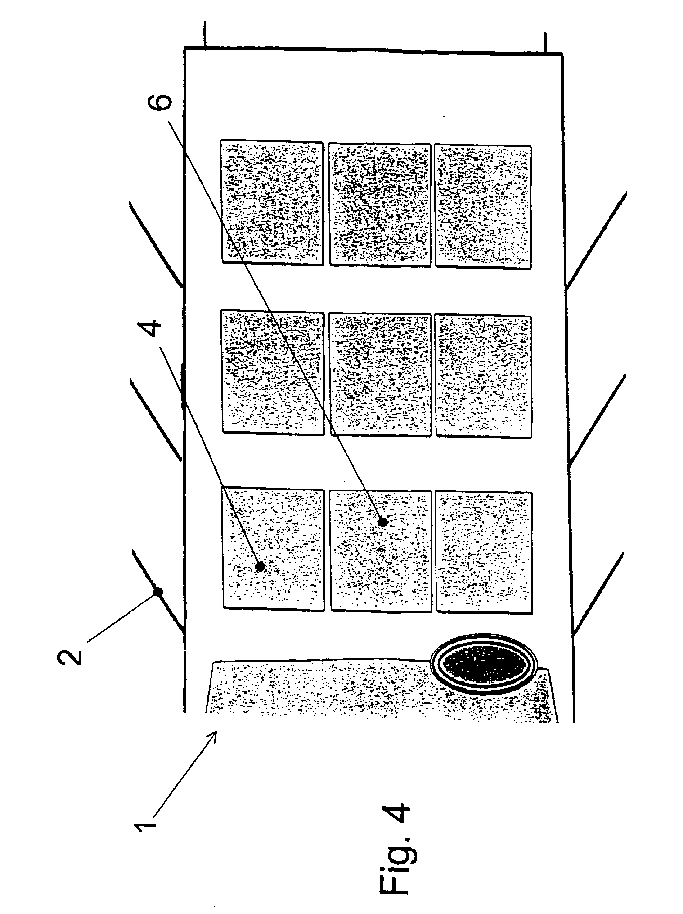

Fig. 4 shows a top view of the passenger compartment interior of a car 1 ; in such embodiment, the space between the two rows of seats 4 is used for installing, between every pair of such adjacent seats 4, some supports (in the Figures a single support is shown with reference 6) adapted to house comfort gadgets such as small tables, telephones, small refrigerators with bar, radio/stereo and/or video systems and the like. Moreover, such space 5 between the two rows of seats 4 could possibly be used for assembling a third row of seats (not shown) in order to be able to bring the number of people that can be transported by the car 1 to nine.

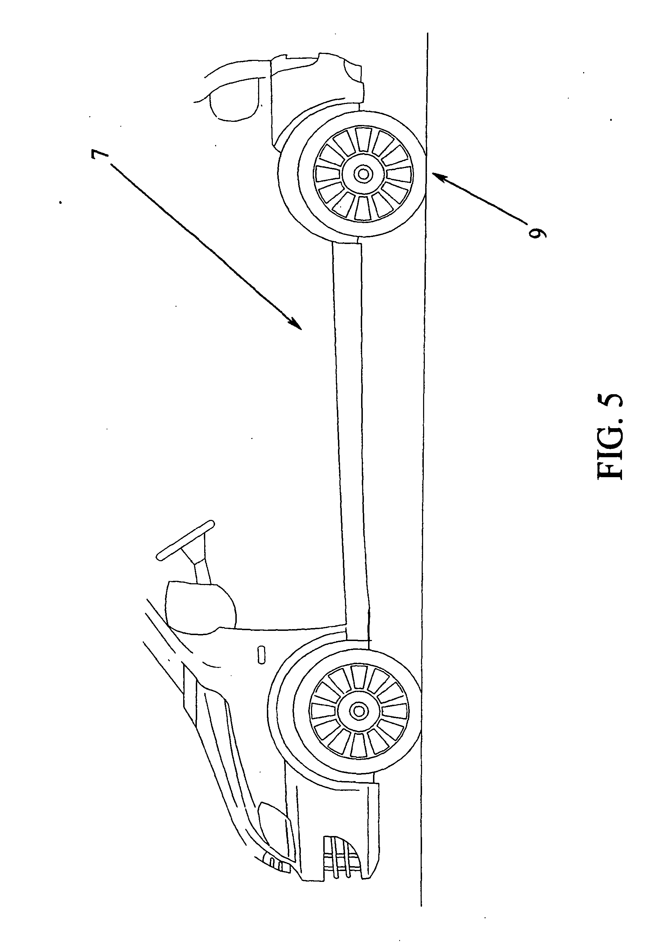

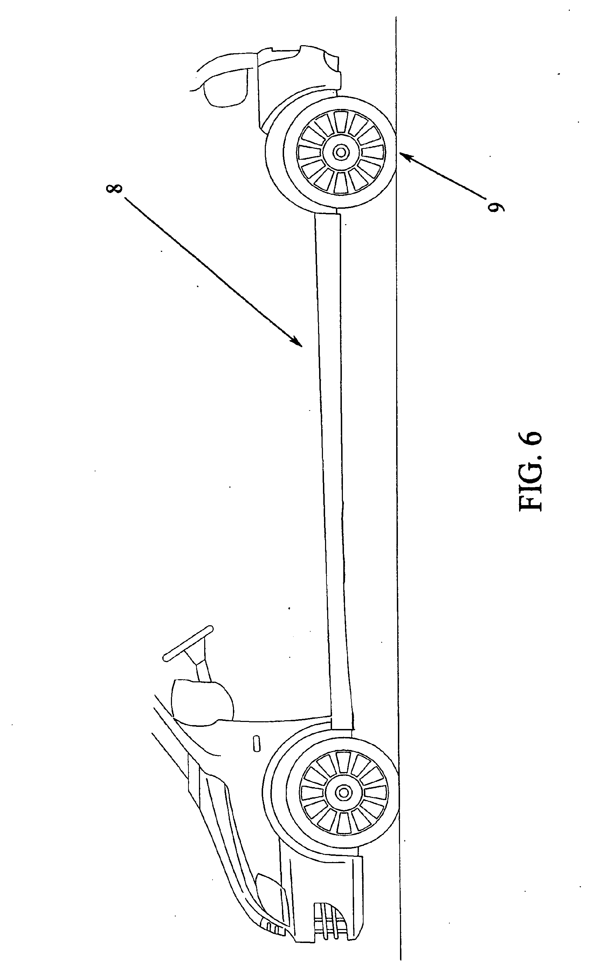

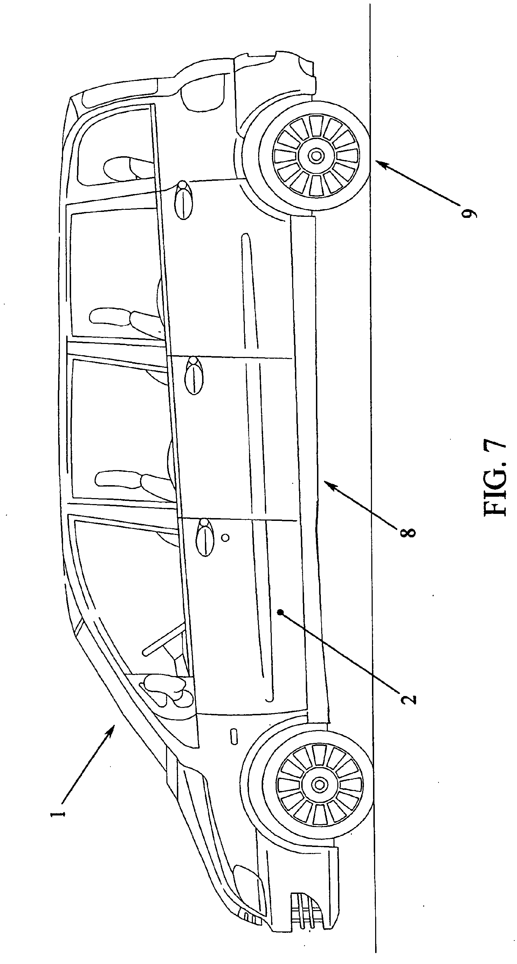

Fig. 5 to 7 schematically show some steps of the manufacturing process according to the present invention; purpose of such process is manufacturing a car 1 according to the present invention by starting from a mass-produced car (in the preferred embodiment of the present invention shown in Fig. 5 to 7 it has been provided to modify the FIAT Multipla car (manufactured by FIAT S.p.A. in Turin, Italy) using the process according to the present invention) including the following steps:
- removing the whole roof panel, the internal compartment trim, the doors, the windscreen and the rear door to obtain the short chassis 7 of the mass-produced car (Fig. 5);
- disassembling the rear axle 9 from the mass-produced car;
- applying an elongated counter-chassis (not shown) that is integrally coupled with the original layouts of the above short chassis 7 in order to obtain a long chassis 8;
- re-assembling the rear axle 9 onto the above long chassis 8 (Fig. 6);
- assembling a cage hoop (not shown) with arrangements for at least three door bays 2 on each side (Fig. 7); and
- re-assembling the seats onto the original connections of the mass-produced car, the components and the possible optionals and comfort gadgets.

From Fig. 7, that shows a car 1 obtained through the above process, it is evident that a chassis 8 elongation has occurred with respect to the mass-produced car from which it derives and the adoption of three doors 2 on each side.

## Claims

1. Process for manufacturing a car (1) with independent accesses (1) for transporting people, such a car comprising: a plurality of doors (2) adapted to allow passengers to access inside said car (1), and a plurality of seats (4) each adapted to accomodate one passenger of said car (1), and wherein the number of said doors (2) is equal to or greater than the number of said seats (4), the number of said doors (2) being greater than four, wherein said process modifies a mass-produced car and comprises the steps of: removing the whole roof panel, the internal compartment trim, the doors, the windscreen and the rear door from said mass-produced car to obtain a short chassis (7); disassembling from said mass-produced car the rear axle (9); applying an elongated counter-chassis that is integrally coupled with the original layouts of said short chassis (7) in order to obtain a long chassis (8); re-assembling said rear axle (9) onto said long chassis (8); assembling a cage hoop with arrangements for at least three door bays (2) on each side; and re-assembling the seats onto the connections kept the same as on said mass-produced car, the components and possible optionals and comfort gadgets.

2. Process according to Claim 1, **characterised in that** said doors (2) are arranged in the same number on the sides of said car (1) parallel to the running direction of the car (1).

3. Process according to Claim 1, **characterised in that** the number of said doors (2) is six, said doors (2) being arranged three on every side parallel to the running direction of said car (1).

4. Process according to Claim 1 or 2, **characterised in that** the number of said seats (4) is six, said seats (4) being arranged on two parallel rows to the running direction of said car (1), and said rows being spaced so that a space (5) is left between them.

5. Process according to Claim 1 or 3, **characterised in that** said roof panel (3) of said car (1) is risen, that in said space (5) a sump is obtained that is able to be walked onto and is parallel to the running direction of said car (1), said risen roof panel (3) and said sump forming a central corridor inside said car (1) adapted to allow the passengers to move in a standing position inside said car (1).

6. Process according to Claim 3, **characterised in that** said space (5) is used for installing, between every pair of said adjacent seats (4), some supports (6) adapted to house comfort gadgets such as small tables, telephones, small refrigerators with bar, radio/stereo and/or video systems.

7. Process according to Claim 3, **characterised in that** said space (5) is used for assembling a third row of three seats adapted to bring the number of people that can be transported on said car (1) to nine.

## Patentansprüche

1. Ein Verfahren für die Herstellung eines Personenkraftwagens mit unabhängigen Eingängen (1) für den Transport von Personen, wobei der genannte Personenkraftwagen folgendes umfasst: mehrere Wagentüren (2), die geeignet sind, den Zutritt der Fahrgäste ins Innere des genannten Personenkraftwagens (1) zu gestatten; und mehrere Sitze (4), die geeignet sind, jeweils einen Fahrgast des genannten Personenkraftwagens (1) aufzunehmen; wobei die Zahl der genannten Wagentüren (2) jeweils der Anzahl der genannten Sitze (4) entspricht oder sie überschreitet, und die Anzahl der genannten Türen (2) über vier liegt, wobei das genannte Verfahren einen Serien-Personenkraftwagen abändert und die Phasen der Entfernung des gesamten Wagendachs, der Innenausstattung des Innenraums, der Türen, der Windschutzscheibe und der Heckschwingtür vom genannten Serien-Personenkraftwagens umfasst, um daraus ein kurzes Fahrgestell (7) zu gewinnen; die Demontage der hinteren Achse (9); die Anwendung eines verlängerten Gegenrahmens, der sich ganz mit den ursprünglichen Formen des genannten kurzen Fahrgestells (7) verbindet, um ein langes Fahrgestell (8) zu erhalten; die Wiedermontage der genannten hinteren Achse (9) an das genannte lange Fahrgestell (8); die Montage des käfigartigen Bogengerüsts mit Vorrüstung für mindestens drei Türräume (2) pro Seitenwand; und Wiedermontage der Sitze an die entsprechenden Verbindungsstücke, die wie im genannten Serien-Personenkraftwagen beibehalten werden, der jeweiligen Komponenten und eventuellen Sonderzubehörteile und Komfort-Gadgets.

2. Ein Verfahren gemäß Anspruch 1, **dadurch gekennzeichnet, dass** die genannten Wagentüren (2) in gleicher Anzahl jeweils an den Seiten des genannten Personenkraftwagens (1) parallel zur Fahrtrichtung angeordnet sind.

3. Ein Verfahren gemäß Anspruch 1, **dadurch gekennzeichnet, dass** die Anzahl der genannten Wagentüren (2) sechs ist, wobei die genannten Türen (2), jeweils drei pro Seite, parallel zur Fahrtrichtung des genannten Personenkraftwagens (1) angeordnet sind.

4. Ein Verfahren gemäß Anspruch 1 oder 2, **dadurch gekennzeichnet, dass** die Anzahl der genannten Sitze (4) sechs ist, wobei die genannten Sitze (4) jeweils in zwei parallel zur Fahrtrichtung des genannten Personenkraftwagens (1) verlaufenden Reihen angeordnet sind, und die genannten Reihen so voneinander entfernt sind, dass zwischen ihnen ein Freiraum (5) bleibt.

5. Ein Verfahren gemäß Anspruch 1 oder 3, **dadurch gekennzeichnet, dass** ein Wagendach (3) des genannten Personenkraftwagens (1) erhöht ist, dass sich in dem genannten Raum (5) eine begehbare, parallel zur Fahrtrichtung des genannten Personenkraftwagens (1) verlaufende Vertiefung befindet, wobei die genannte Erhöhung des genannten Wagendachs (3) und die genannte begehbare Vertiefung einen mittleren, im Innern des genannten Personenkraftwagens (1) liegenden Gang bilden, der es den Fahrgästen gestattet, sich im Innern des genannten Personenkraftwagens (1) aufrecht zu bewegen.

6. Ein Verfahren gemäß Anspruch 3, **dadurch gekennzeichnet, dass** der genannte Raum (5) für die Installation von Trägern (6) zwischen jedem Paar der genannten nebeneinander liegenden Sitze (4) genutzt wird, welche geeignet sind, Komfort-Gadgets wie kleine Tischchen, Telefone, Mini-Kühlschränke, Radio-/Stereo-/ und/oder Videoanlagen aufzunehmen.

7. Ein Verfahren gemäß Anspruch 3, **dadurch gekennzeichnet, dass** der genannte Raum (5) für die Montage einer dritten Reihe von jeweils drei Sitzen genutzt wird, wodurch die Anzahl der mit dem genannten Personenkraftwagen (1) transportierten Fahrgäste auf neun ansteigt.

## Revendications

1. Procédé de production d'une automobile avec des accès indépendants (1) pour le transport de personnes, ladite automobile comportant : une pluralité de portes (2) permettant aux passagers d'accéder à l'intérieur de ladite automobile (1) ; et une pluralité de sièges (4) chacun permettant d'accueillir un passager de ladite automobile (1) ; et dans lequel le nombre desdites portes (2) est égal ou supérieur au nombre desdits sièges (4), le nombre desdites portes (2) étant supérieur à quatre, dans lequel ledit procédé modifie une automobile de série et comprend les phases de : retrait de tout le pavillon, du revêtement interne de l'habitacle, des portes, du pare-brise et du hayon arrière de ladite automobile de série pour obtenir un châssis court (7) ; démontage du pont arrière (9) de ladite automobile de série ; application d'un contre-châssis allongé qui se couple intégralement avec les formes d'origine dudit châssis court (7) pour obtenir un châssis long (8) ; remontage dudit pont arrière (9) sur ledit châssis long (8) ; placement d'une structure à cage prévue pour au moins trois emplacements porte (2) par côté ; et remontage des sièges sur les fixations maintenus comme dans ladite automobile de série, des accessoires et d'éventuels options et gadgets de confort.

2. Procédé selon la revendication 1, **caractérisé en ce que** lesdites portes (2) sont placées en nombre égal sur les côtés de ladite automobile (1) parallèlement au sens de la marche.

3. Procédé selon la revendication 1, **caractérisé en ce que** lesdites portes (2) sont au nombre de six, lesdites portes (2) étant placées par trois sur chaque côté parallèle au sens de la marche de ladite automobile (1).

4. Procédé selon la revendication 1 ou 2, **caractérisé en ce que** lesdits sièges (4) sont au nombre de six, lesdits sièges (4) étant placés sur deux rangs parallèles au sens de la marche de ladite automobile (1), et lesdits rangs étant placés à distance l'un de l'autre de manière à laisser un espace (5) entre eux.

5. Procédé selon la revendication 1 ou 3, **caractérisé en ce qu'**un pavillon (3) de ladite automobile (1) est rehaussé, qu'un passage parallèle au sens de la marche de ladite automobile (1) est réalisé dans ledit espace (5), ledit relèvement dudit pavillon (3) et ledit passage formant un couloir central interne de ladite automobile (1) permettant aux passagers de se déplacer debout à l'intérieur de ladite automobile (1).

6. Procédé selon la revendication 3, **caractérisé en ce que** ledit espace (5) est utilisé pour installer, entre chaque paire desdits sièges (4) adjacents, des supports (6) permettant d'accueillir des gadgets de confort tels que des tables, téléphones, minibars, équipements radio/stéréo et/ou vidéo.

7. Procédé selon la revendication 3, **caractérisé en ce que** ledit espace (5) est utilisé pour monter un troisième rang de trois sièges permettant d'augmenter le nombre de personnes pouvant être transportées dans ladite automobile (1) jusqu'à neuf.
